# EUROPÄISCHE PATENTSCHRIFT

(11) **EP 1 457 799 B1**
(45) Veröffentlichungstag und Bekanntmachung des Hinweises auf die Patenterteilung: **11.04.2007**
(21) Anmeldenummer: 03005188.2
(22) Anmeldetag: 08.03.2003
(51) Int. Cl.: G02B 7/00, H01S 3/02, G12B 5/00, F16M 7/00, G01M 11/04

(54) **Lagerfusspaar und Lagervorrichtung, insbesondere für einen Laserresonator**
Pair of mounts and supporting device, in particular for a Laser resonator
Paire de supports et dispositif de support, en particulier pour un résonateur Laser

(43) Veröffentlichungstag der Anmeldung: 15.09.2004
(73) Patentinhaber: TRUMPF LASERTECHNIK GmbH, D-71254 Ditzingen (DE)
(72) Erfinder: Zeller, Thomas, 71063 Sindelfingen (DE)
(74) Vertreter: Kohler Schmid Möbus

(56) Entgegenhaltungen:
- EP-A- 0 139 132
- EP-A- 1 267 458
- US-A- 4 625 424
- US-A- 4 750 405
- US-A- 6 009 815

## Beschreibung

Die vorliegende Erfindung betrifft ein Lagerfußpaar aus zwei Lagerfüßen sowie eine Lagervorrichtung, insbesondere für einen Laserresonator.

Ein derartiger Lagerfuß und eine derartige Lagervorrichtung sind beispielsweise durch die EP 1 267 458 A1 bekannt geworden.

Die bekannte Lagervorrichtung dient als Unterbau für einen quadratisch aufgebauten Laserresonator, der aus einem Resonatorrahmen sowie einem Auskoppelblock und drei Umlenkblöcken besteht, die mit dem Resonatorrahmen verschraubt sind. Der Auskoppelblock enthält einen Auskoppel- und einen Rückspiegel, und bei einem doppelt quadratisch aufgebauten Laserresonator mit zwei Entladungsebenen zusätzlich einen Retroreflektor, der den Laserstrahl aus der ersten Entladungsebene in die zweite Entladungsebene umlenkt. Die Umlenkblöcke enthalten jeweils einen Umlenkspiegel, der den Laserstrahl um 90° umlenkt. Die Lagervorrichtung umfasst drei auf einer Grundplatte angeordnete Lagerfüße, die eine 3-Punkt-Lagerung bilden. Der unterhalb des Auskoppelblocks angeordnete erste Lagerfuß ist als Festlager ausgebildet, das zwei rotatorische und keinen translatorischen Freiheitsgrad besitzt, und der unterhalb eines Umlenkblocks angeordnete zweite Lagerfuß ist als eindimensionales Loslager ausgebildet, das zwei rotatorische und einen translatorischen Freiheitsgrad besitzt. Der dritte Lagerfuß ist zwischen zwei Umlenkblöcken angeordnet und als zweidimensionales Loslager ausgebildet, das Bewegungen mit zwei rotatorischen und zwei translatorischen Freiheitsgraden zulässt. Diese Anordnung stellt sicher, dass bei thermischer Ausdehnung des Resonatorrahmens die Strahlachse nahezu unverändert bleibt und thermische Ausdehnungen der Grundplatte nicht auf den Resonatorrahmen übertragen werden. Bei dieser Anordnung erfolgt die Krafteinleitung in den Resonatorrahmen allerdings unsymmetrisch. Der Auskoppelblock und ein Umlenkblock sind relativ gut abgestützt, während die beiden weiteren Umlenkblöcke jedoch "frei schwebend" am Resonatorrahmen hängen, der dadurch unsymmetrisch belastet wird. Zu der Belastung durch die Gewichtskraft der Blöcke, die tendenziell mit steigenden Laserleistungen in den letzten Jahren zunahm, kommt noch die Belastung durch die Vakuumkraft, die über die Blöcke auf den Resonatorrahmen wirkt.

Die Aufgabe der vorliegenden Erfindung ist es daher, ein Lagerfußpaar und eine Lagervorrichtung bereitzustellen, die die eingeleiteten Kräfte möglichst symmetrisch aufnehmen können.

Diese Aufgabe wird bei einem Lagerfußpaar erfindungsgemäß dadurch gelöst, dass die beiden Lagerfüße jeweils höhenverstellbar und miteinander gegenläufig höhengekoppelt sind.

Eine Verkürzung des einen Lagerfußes führt zu einer entsprechenden Längung des anderen Lagerfußes, wodurch sich die Kraft bei Belastung im Verhältnis 1:1 auf beide Lagerfüße verteilt.

Vorzugsweise wird die Höhenverstellbarkeit durch einen oder zwei voneinander höhenbeabstandete Faltenbälge gelöst, die sich durch wenig Kraftaufwand axial längen bzw. verkürzen lassen und hohen Drücken standhalten. Durch den Einsatz zweier axial beabstandeter Faltenbälge pro Lagerfuß wirkt dieser wie ein Kardangelenk, wodurch ein zweidimensionales Loslager gebildet wird.

Bei einer bevorzugten Ausführungsform der Erfindung sind die beiden Lagerfüße teleskopartig ausziehbar und jeweils mit einem Fluid, insbesondere mit einer Flüssigkeit wie z.B. Öl, gefüllt, die zumindest bei den im Betrieb auftretenden Kräften inkompressibel ist. Bei einer anderen Ausführungsform weisen die Lagerfüße einen mittels der inkompressiblen Flüssigkeit verschiebbaren Kolben auf, der mit einem 0-Ring in einer Zylinderführung abgedichtet ist. Material und Geometrie, d.h. Verhältnis von Länge zu Durchmesser, des Lagerfußes werden so ausgewählt, dass eine Volumenänderung des Flüssigkeitsmediums aufgrund von Temperaturänderung durch eine Ausdehnung des Lagerfußes in radialer Richtung und nicht durch eine Längenausdehnung der Faltenbälge kompensiert wird.

Die gegenläufige Höhenkopplung der beiden Lagerfüße erfolgt am einfachsten hydraulisch, indem die beiden mit der inkompressiblen Flüssigkeit gefüllten Lagerfüße über ein Rohr miteinander verbunden sind. Die gegenläufige Höhenkopplung der beiden Lagerfüße kann aber auch elektrisch oder mechanisch erfolgen.

Erfindungsgemäß können die beiden Lagerfüße als Festlager oder als ein- oder zweidimensionales Loslager ausgebildet sein.

Die oben genannte Aufgabe wird auch gelöst durch eine Lagervorrichtung, insbesondere als Unterbau für einen Laserresonator, mit vier Lagerfüßen, von denen zwei wie oben beschrieben ausgebildet sind.

Der Resonatorrahmen wird auf mindestens vier Lagerfüßen und damit symmetrisch gelagert. Da zwei der vier Lagerfüße miteinander höhengekoppelt sind, ist diese statisch bestimmte 4-Punkt-Resonatorlagerung nicht überbestimmt. Da eine Verkürzung des einen Lagerfußes zu einer entsprechenden Längung des gekoppelten anderen Lagerfußes führt, verteilt sich die Kraft bei Belastung im Verhältnis 1:1 auf beide Lagerfüße, und der Resonatorrahmen wird nahezu symmetrisch belastet. Selbst thermischer Gang der Grundplatte führt durch diese Lagerung nicht zu einem Verspannen des Resonatorrahmens.

Vorzugsweise sind die beiden miteinander gekoppelten Lagerfüße jeweils als zweidimensionales Loslager und die beiden anderen Lagerfüße als Festlager und als eindimensionales Loslager ausgebildet.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: das erfindungsgemäße Lagerfußpaar in einer teilweise aufgeschnittenen Seitenansicht;
- Fig. 2: eine andere Ausführungsform des Lagerfußes mit integrierter Kühlung; und
- Fig. 3: die erfindungsgemäße Lagervorrichtung als Unterbau für einen Laserresonator.

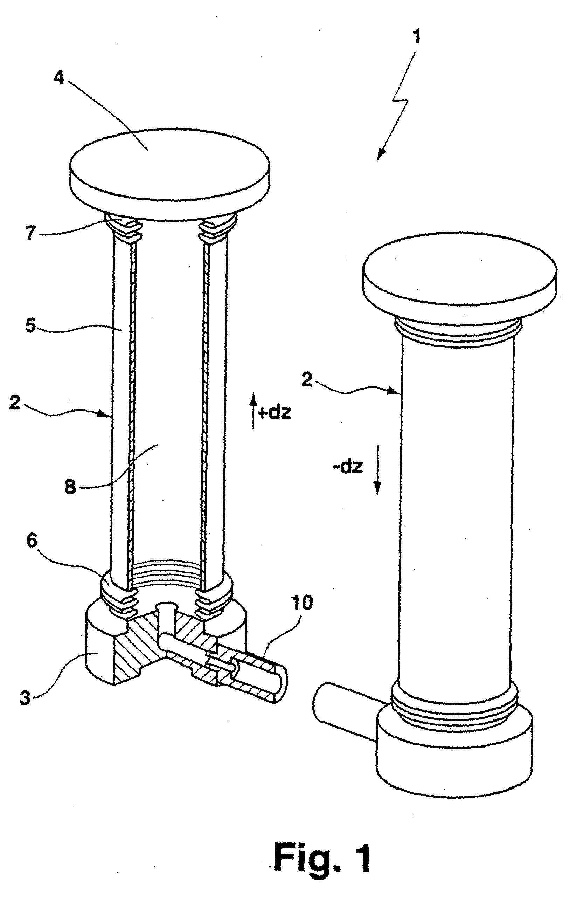

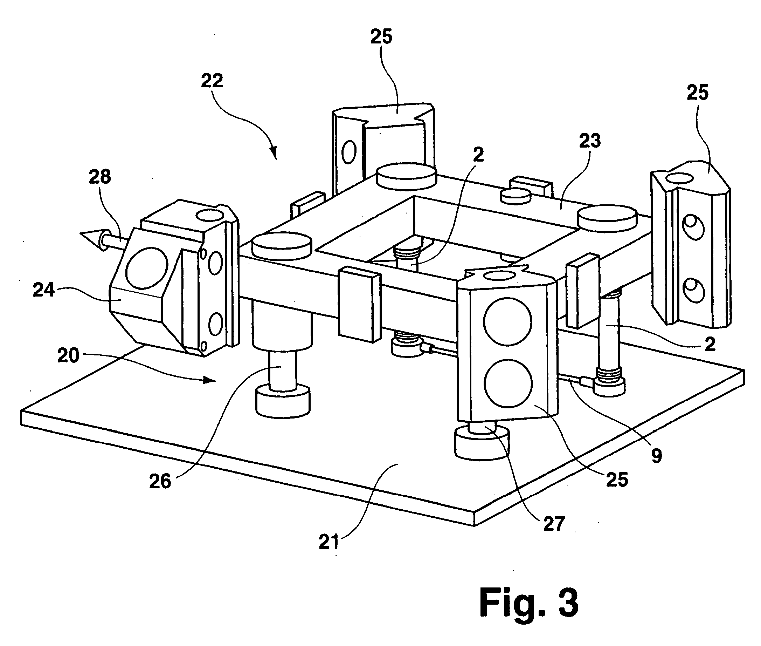

**Fig. 1** zeigt ein Lagerfußpaar **1**, dessen beide Lagerfüße **2** jeweils höhenverstellbar und miteinander gegenläufig höhengekoppelt sind. Die beiden identisch aufgebauten Lagerfüße **2** weisen jeweils einen Bodenflansch **3**, einen Kopfflansch **4** und dazwischen ein Rohr **5** auf, das mit Boden- und Kopfflansch **3, 4** jeweils über einen Faltenbalg **6, 7** verbunden ist. Die durch das Rohr 5 und die Faltenbälge **6, 7** definierten Innenräume **8** der Lagerfüße **2** sind mit einer Flüssigkeit (z.B. Öl) gefüllt, die zumindest bei den im Betrieb auftretenden Kräften inkompressibel ist. Die beiden Innenräume 8 der Lagerfüße 2 sind über eine Verbindungsleitung **9** (Fig. 3), die jeweils an einen Anschlussstutzen **10** am Bodenflansch 3 angeschlossen ist, miteinander verbunden.

Durch die beiden Faltenbälge 6, 7, die sich durch wenig Kraftaufwand axial längen bzw. verkürzen lassen und hohen Drücken standhalten, sind die Lagerfüße 2 jeweils axial verschiebbar und damit höhenverstellbar. Durch die Verbindungsleitung 9 sind beide Lagerfüße 2 miteinander gegenläufig hydraulisch gekoppelt, d.h. eine Verkürzung des einen Lagerfußes 2 um -**dz** führt zu einer entsprechenden Längung +**dz** des anderen Lagerfußes 2, wodurch sich die Kraft bei Belastung im Verhältnis 1:1 auf beide Lagerfüße 2 verteilt. Die Differenz durch Reibungsverluste und die unterschiedlichen Kräfte der Faltenbälge (+dz und -dz) ist vernachlässigbar. Durch den Einsatz zweier Faltenbälge 6, 7 pro Lagerfuß 2 wirkt dieser wie ein Kardangelenk, so dass die beiden Lagerfüße 2 jeweils als 2-dimensionales Loslager wirken.

Im Fall von Öl als inkompressiblem Medium können durch hermetische Verschweißung der Faltenbälge 6, 7 Leckage und damit Verschmutzung der Umgebung ausgeschlossen werden.

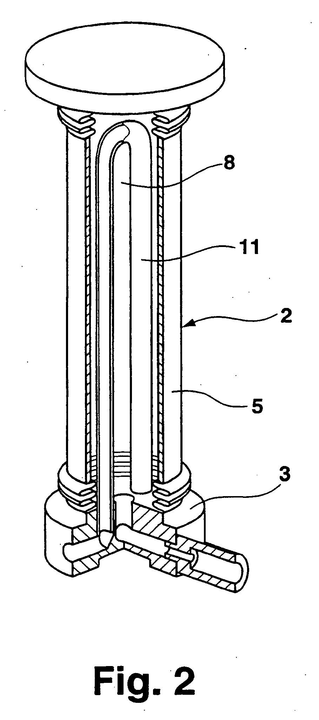

**Fig. 2** zeigt den Lagerfuß 2 mit integrierter Kühlung des Flüssigkeitsmediums, die im Betrieb eine Erwärmung des Lagerfußes 2 durch die Umgebungsbedingungen verhindert. Die Kühlung umfasst eine im Innenraum 8 U-förmig verlaufende Kühlleitung **11,** deren Anschlüsse im Bodenflansch 3 vorgesehen sind. Material und Geometrie, d.h. Verhältnis von Länge zu Durchmesser, des Lagerfußes werden so ausgewählt, dass eine Volumenänderung des Flüssigkeitsmediums aufgrund von Temperaturänderung durch eine Ausdehnung des Lagerfußes in radialer Richtung und nicht durch eine Längenausdehnung der Faltenbälge kompensiert wird.

**Fig. 3** zeigt eine Lagervorrichtung **20** mit vier auf einer Grundplatte **21** befestigten Lagerfüßen, von denen zwei Lagerfüße 2 wie in Fig. 1 beschrieben ausgebildet sind. Die Lagervorrichtung 20 dient als Unterbau für einen Laserresonator **22,** der aus einem Resonatorrahmen **23** und vier damit verschraubten Auskoppel- und Umlenkblöcken **24, 25** besteht. Die beiden miteinander gekoppelten Lagerfüße 2 sind jeweils als zweidimensionales Loslager und die beiden anderen Lagerfüße **26, 27** als Festlager und als eindimensionales Loslager ausgebildet.

## Patentansprüche

1. Lagervorrichtung (20), insbesondere als Unterbau für einen Laserresonator (22), mit mindestens drei Lagerfüßen (2, 26, 27), die ein Festlager, ein eindimensionales Loslager und ein zweidimensionales Loslager bilden,
**dadurch gekennzeichnet,**
**dass** vier Lagerfüße vorgesehen sind, von denen zwei jeweils höhenverstellbar und miteinander gegenläufig höhengekoppelt sind und das Festlager, das eindimensionale Loslager oder das zweidimensionale Loslager bilden.

2. Lagervorrichtung nach Anspruch 1, **dadurch gekennzeichnet, dass** die beiden miteinander gekoppelten Lagerfüße (2) jeweils einen oder zwei voneinander höhenbeabstandete Faltenbälge (6, 7) aufweisen.

3. Lagervorrichtung nach Anspruch 1 oder 2, **dadurch gekennzeichnet, dass** die beiden miteinander gekoppelten Lagerfüße (2) teleskop- oder kolbenartig verschiebbar sind.

4. Lagervorrichtung nach einem der vorhergehenden Ansprüche, **dadurch gekennzeichnet, dass** die beiden miteinander gekoppelten Lagerfüße (2) mit einem inkompressiblen Fluid, insbesondere einer inkompressiblen Flüssigkeit, gefüllt sind.

5. Lagervorrichtung nach einem der vorhergehenden Ansprüche, **dadurch gekennzeichnet, dass** die beiden miteinander gekoppelten Lagerfüße (2) miteinander hydraulisch, elektrisch oder mechanisch gegenläufig gekoppelt sind.

6. Lagervorrichtung nach einem der vorhergehenden Ansprüche, **dadurch gekennzeichnet, dass** die beiden miteinander gekoppelten Lagerfüße (2) gekühlt sind.

7. Lagervorrichtung nach einem der vorhergehenden Ansprüche, **dadurch gekennzeichnet, dass** die beiden miteinander gekoppelten Lagerfüße (2) das zweidimensionale Loslager und die beiden anderen Lagerfüße (26, 27) das Festlager und das eindimensionale Loslager bilden.

## Claims

1. Supporting device (20), especially as a base for a laser resonator (22), having at least three support feet (2, 26, 27) which form a fixed bearing, a one-dimensional movable bearing and a two-dimensional movable bearing,
**characterised in**
**that** four support feet are provided, two of which in each case are adjustable in height and height-coupled to each other for movement in opposite directions and form the fixed bearing, the one-dimensional movable bearing or the two-dimensional movable bearing.

2. Supporting device according to claim 1, **characterised in that** the two support feet (2) that are coupled to each other have in each case one or two bellows (6, 7) which are spaced from each other in height.

3. Supporting device according to claim 1 or 2, **characterised in that** the two support feet (2) that are coupled to each other are displaceable telescopically or in the manner of pistons.

4. Supporting device according to any one of the preceding claims, **characterised in that** the two support feet (2) that are coupled to each other are filled with an incompressible fluid, especially an incompressible liquid.

5. Supporting device according to any one of the preceding claims, **characterised in that** the two support feet (2) that are coupled to each other are hydraulically, electrically or mechanically coupled to each other for movement in opposite directions.

6. Supporting device according to any one of the preceding claims, **characterised in that** the two support feet (2) that are coupled to each other are cooled.

7. Supporting device according to any one of the preceding claims, **characterised in that** the two support feet (2) that are coupled to each other form the two-dimensional movable bearing and the two other support feet (26, 27) form the fixed bearing and the one-dimensional movable bearing.

## Revendications

1. Dispositif de support (20), en particulier comme infrastructure pour un résonateur laser (22), avec au moins trois pieds de support (2, 26, 27), qui constituent un support fixe, un support libre unidimensionnel et un support libre bidimensionnel, **caractérisé en ce**
**que** quatre pieds de support sont prévus, dont deux sont respectivement réglables en hauteur et couplés en hauteur les uns avec les autres de manière opposée et constituent le support fixe, le support libre unidimensionnel ou le support libre bidimensionnel.

2. Dispositif de support selon la revendication 1, **caractérisé en ce que** les deux pieds de support (2) couplés l'un avec l'autre présentent respectivement un ou deux soufflets (6, 7) maintenus à distance l'un de l'autre en hauteur.

3. Dispositif de support selon la revendication 1 ou 2, **caractérisé en ce que** les deux pieds de support (2) couplés l'un avec l'autre sont coulissables de manière télescopique ou à la manière d'un piston.

4. Dispositif de support selon l'une quelconque des revendications précédentes, **caractérisé en ce que** les deux pieds de support (2) couplés l'un avec l'autre sont remplis d'un fluide incompressible, en particulier d'un liquide incompressible.

5. Dispositif de support selon l'une quelconque des revendications précédentes, **caractérisé en ce que** les deux pieds de support (2) couplés l'un avec l'autre sont couplés l'un avec l'autre de manière opposée de façon hydraulique, électrique ou mécanique.

6. Dispositif de support selon l'une quelconque des revendications précédentes, **caractérisé en ce que** les deux pieds de support (2) couplés l'un avec l'autre sont refroidis.

7. Dispositif de support selon l'une quelconque des revendications précédentes, **caractérisé en ce que** les deux pieds de support (2) couplés l'un avec l'autre constituent le support libre bidimensionnel et les deux autres pieds de support (26, 27) le support fixe et le support libre unidimensionnel.
